(19) Europäisches Patentamt
European Patent Office
Office européen des brevets

(11) **EP 3 332 146 B1**

(12) **FASCICULE DE BREVET EUROPEEN**

(45) Date de publication et mention
de la délivrance du brevet:
**27.11.2019 Bulletin 2019/48**

(21) Numéro de dépôt: **16745692.0**

(22) Date de dépôt: **26.07.2016**

(51) Int Cl.:
***F16F 15/123*** *(2006.01)*

(86) Numéro de dépôt international:
**PCT/EP2016/067840**

(87) Numéro de publication internationale:
**WO 2017/021238 (09.02.2017 Gazette 2017/06)**

(54) **PROCEDE DE DIMENSIONNEMENT D'UN AMORTISSEUR D'OSCILLATIONS DE TORSION D'UN GROUPE MOTOPROPULSEUR DE VEHICULE**

VERFAHREN ZUR DIMENSIONIERUNG EINES TORSIONSSCHWINGUNGSDÄMPFERS EINES HYBRIDFAHRZEUGS

METHOD FOR SIZING A TORSIONAL OSCILLATION DAMPER OF A VEHICLE POWER TRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2015 FR 1557502**

(43) Date de publication de la demande:
**13.06.2018 Bulletin 2018/24**

(73) Titulaire: **Valeo Embrayages**
**80009 Amiens Cedex 2 (FR)**

(72) Inventeurs:
• LEFEBVRE, Yannick
**80009 Amiens (FR)**
• MAHE, Hervé
**80009 Amiens (FR)**

(56) Documents cités:
**WO-A1-2007/054050**     **DE-A1-102012 205 792**
**DE-A1-102014 205 045**     **DE-T5-112010 006 009**
**US-A1- 2014 274 524**

**Description**

La présente invention concerne le dimensionnement d'un amortisseur d'oscillations de torsion appartenant à un groupe motopropulseur de véhicule.

Un tel amortisseur d'oscillations de torsion est par exemple interposé entre le moteur de propulsion du véhicule et la boîte de vitesses du véhicule et il est disposé dans le chemin du couple fourni par le moteur de propulsion aux roues motrices du véhicule. L'amortisseur est destiné à réduire les oscillations de torsion qui se propagent dans le groupe motopropulseur du fait des acyclismes du moteur thermique.

Les documents DE 10 2012 205792 A1, DE 11 2010 006009 T5, DE 10 2014 205045 A1, US 2014/274524 A1 et WO 2007/054050 A1 décrivent des exemples d'un tel amortisseur d'oscillations. Le document DE 10 2012 205792 A1 est considéré comme l'état de la technique le plus proche et décrit toutes les caractéristiques du préambule des revendications 1 et 8.

Dans ce but, il est connu d'utiliser un amortisseur avec deux étages d'amortissement montés en série et de disposer, entre les deux étages d'amortissement de cet amortisseur, un dispositif de type pendulaire, comprenant un support et des corps pendulaires montés mobiles sur ce support. Le premier étage d'amortissement de l'amortisseur peut comprendre une pluralité d'organes de rappel élastique montés en parallèle, et la raideur de ces organes de rappel élastique, ainsi que le dispositif de type pendulaire sont dimensionnés de manière à filtrer les oscillations de torsion.

Malgré un tel dimensionnement du premier étage d'amortissement de l'amortisseur et du dispositif de type pendulaire, les vibrations du support du dispositif de type pendulaire qui sont dues aux oscillations de torsion restent importantes. Les performances de filtrage fournies par le dispositif d'amortissement de type pendulaire ne sont alors pas optimales et les corps pendulaires de ce dernier peuvent entrer en saturation.

Il existe un besoin pour remédier à cet inconvénient et l'invention a pour but de répondre à ce besoin.

L'invention y parvient, selon l'un de ses aspects, à l'aide d'un procédé de dimensionnement du deuxième étage d'amortissement d'un amortisseur d'oscillations de torsion appartenant à un groupe motopropulseur de véhicule, ce groupe comprenant :

- un système en amont de l'amortisseur d'oscillations de torsion, comprenant un moteur de propulsion,
- un système en aval de l'amortisseur d'oscillations de torsion, comprenant une boîte de vitesses, et
- l'amortisseur d'oscillations de torsion, comprenant:

  - un premier étage d'amortissement, comprenant des premiers organes de rappel élastique,
  - le deuxième étage d'amortissement, comprenant des deuxièmes organes de rappel élastique, et
  - un dispositif d'amortissement de type pendulaire, comprenant un support et des corps pendulaires mobiles par rapport à ce support, le support étant disposé entre les premiers et les deuxièmes organes de rappel élastique dans le sens de transmission du couple depuis le moteur de propulsion vers la boîte de vitesses,

procédé dans lequel, connaissant :

- la valeur du moment d'inertie du système en aval,
- la valeur du moment d'inertie du dispositif d'amortissement de type pendulaire,
- la valeur de la raideur (K1) de l'organe de rappel élastique unique modélisant les premiers organes de rappel élastique, et
- la valeur de la raideur (Kgis) de l'arbre d'entrée de la boîte de vitesse,

on détermine la valeur de la raideur (K2) de l'organe de rappel élastique unique modélisant les deuxièmes organes de rappel élastique de manière à ce que le support du dispositif d'amortissement de type pendulaire soit un nœud pour l'onde se propageant dans le groupe motopropulseur du fait d'un acyclisme du moteur de propulsion.

L'invention consiste à utiliser le deuxième étage d'amortissement de l'amortisseur d'oscillations de torsion pour annuler les vibrations sur le support du dispositif d'amortissement de type pendulaire, puisque ce dernier forme alors un nœud pour l'onde correspondant à une oscillation de torsion se propageant dans le groupe motopropulseur, sans pour autant agir sur :

- la valeur du moment d'inertie du système en aval et la valeur de la raideur de l'arbre d'entrée de la boîte de vitesses, qui sont imposées par le constructeur du véhicule, et
- la valeur du moment d'inertie du dispositif d'amortissement de type pendulaire et la valeur de la raideur de l'organe de rappel élastique unique modélisant les premiers organes de rappel élastique, ces dernières valeurs étant choisies pour filtrer les oscillations de torsion se propageant dans le groupe motopropulseur.

La valeur de la raideur de l'organe de rappel élastique unique modélisant les deuxièmes organes de rappel élastique peut être déterminée en connaissant également la valeur du moment d'inertie du système en amont de l'amortisseur d'oscillations de torsion.

Strictement parlant, le deuxième étage d'amortissement de l'amortisseur d'oscillations de torsion et l'arbre d'entrée de la boîte de vitesses ne sont pas en série, puisqu'entre autres, la sortie de cet amortisseur présente un moment d'inertie non nul. Néanmoins, du fait des ordres de grandeur présents, l'organe de rappel élastique unique modélisant les deuxièmes organes de rappel élastique de ce deuxième étage d'amortissement et l'arbre d'entrée de la boîte de vitesses peuvent être considérés comme deux raideurs en série dont la raideur équivalente Ktot est :

$$Ktot = (K2*Kgis)/(K2+Kgis).$$

Cette raideur équivalente Ktot présente une valeur optimale Ktot_optim qui est fonction de la vitesse du moteur de propulsion et de l'ordre d'excitation du moteur du véhicule, ce dernier étant égal au nombre d'explosions de ce moteur par tour de vilebrequin, et on peut choisir la valeur de la raideur de l'organe de rappel élastique unique modélisant les deuxièmes organes de rappel élastique de manière à ce que :

- (Kgis/K2)>5, notamment (Kgis/K2)>10, notamment (Kgis/K2)>100, Kgis désignant la valeur de la raideur de l'arbre d'entrée de la boîte de vitesses, et
- K2<1,1*min(Ktot_optim), min(Ktot_optim) désignant la valeur minimale de la valeur optimale Ktot_optim de la raideur équivalente Ktot.

Ktot_optim s'obtient par exemple par la formule suivante :

Ktot_optim = $ne^2$ x $w^2$ x I_transmission - K_arbres_roues,
ne désignant l'ordre d'excitation du moteur du véhicule,
w désignant la vitesse du moteur de propulsion,
I_transmission désignant le moment d'inertie du système en aval de l'amortisseur d'oscillations de torsion, et
K_arbres_roues désignant la raideur unique correspondant aux deux arbres de roues en parallèle.

On peut déterminer la valeur minimale de Ktot_optim en cherchant la valeur de la vitesse du moteur qui fournit cette valeur minimale.

Un tel groupe motopropulseur présente une valeur élevée de raideur de l'arbre d'entrée de la boîte de vitesses, et le choix ci-dessus de la valeur de la raideur de l'organe de rappel élastique unique modélisant les deuxièmes organes de rappel élastique du deuxième étage d'amortissement permet d'annuler les vibrations sur le support du dispositif d'amortissement d'oscillations de torsion de type pendulaire dans un tel groupe motopropulseur.

En variante, la valeur de la raideur de l'organe de rappel élastique unique modélisant les deuxièmes organes de rappel élastique peut être déterminée de manière à ce que :

- (Kgis/K2)<5, notamment (Kgis/K2)<10, notamment (Kgis/K2)<100, et
- (K2*Kgis)/(K2+Kgis)<0,84*min(Ktot_optim), min(Ktot_optim) désignant la valeur minimale de la valeur optimale de la raideur équivalente Ktot.

Selon cette variante, le groupe motopropulseur présente une valeur plus faible de raideur de l'arbre d'entrée de la boîte de vitesses, et le choix ci-dessus de la valeur de la raideur de l'organe de rappel élastique unique modélisant les deuxièmes organes de rappel élastique du deuxième étage d'amortissement permet d'annuler les vibrations sur le support du dispositif d'amortissement de type pendulaire dans un tel groupe motopropulseur.

Le groupe motopropulseur peut comprendre un convertisseur de couple hydrodynamique ou un double embrayage, par exemple un double embrayage à sec ou un double embrayage humide.

Lorsqu'un convertisseur de couple hydrodynamique est présent, l'entrée de ce convertisseur tel que son boîtier, sa turbine et une flexplate peuvent faire partie du système en amont de l'amortisseur d'oscillations de torsion, tandis que la sortie de ce convertisseur, tel que son moyeu de sortie, peuvent faire partie du système en aval de l'amortisseur d'oscillations de torsion. Dans une variante la turbine peut être rigidement connectée au support du dispositif d'amortissement de type pendulaire.

Le système en aval de l'amortisseur d'oscillations de torsion peut comprendre un arbre de sortie de boîte de vitesses, un pont et un différentiel arrière.

Le système en aval de l'amortisseur d'oscillations de torsion est par exemple constitué par les éléments suivants, ainsi que par les liaisons entre ces éléments: boîte de vitesses, cardan élastique avant, première partie de l'arbre de propulsion, deuxième partie de l'arbre de propulsion, cardan élastique arrière et différentiel arrière. Le cas échéant, un cardan intermédiaire peut être présent entre les deux parties de l'arbre de propulsion.

I_transmission correspond alors au moment d'inertie de l'ensemble des éléments mentionnés au paragraphe précédent.

Ce système en aval de l'amortisseur peut alors être monté en entrée des roues motrices du véhicule.

Dans un exemple particulier de mise en œuvre de l'invention, le groupe motopropulseur comprend :

- un moteur de propulsion, ce dernier étant un moteur thermique dont le nombre de cylindres peut être compris entre 1 et 12,
- un convertisseur de couple hydrodynamique,
- un amortisseur d'oscillations de torsion comprenant deux étages d'amortissement en série, et un dispositif d'amortissement de type pendulaire disposé entre ces deux étages,
- une boîte de vitesses,
- un cardan élastique avant,
- un cardan élastique arrière,
- une arbre de propulsion en deux parties reliant les cardans élastiques avant et arrière,
- un différentiel arrière, et
- des roues motrices.

Dans un exemple précis de réalisation de l'amortisseur d'oscillations de torsion, chaque étage de ce dernier présente une entrée et une sortie, et le support du dispositif d'amortissement de type pendulaire est solidaire de la sortie du premier étage et de l'entrée du deuxième étage. Le support du dispositif d'amortissement de type pendulaire est par exemple un flasque distinct de l'entrée du deuxième étage et de la sortie du premier étage, et ce flasque est rigidement couplé à cette entrée et à cette sortie. En variante, le support du dispositif d'amortissement de type pendulaire est réalisé d'une seule pièce avec l'une de l'entrée du deuxième étage et de la sortie du premier étage. En variante encore, le support du dispositif d'amortissement de type pendulaire, l'entrée du deuxième étage, et la sortie du premier étage forment une seule et même pièce.

Les premiers organes de rappel élastique et les deuxièmes organes de rappel élastique peuvent être décalés radialement par rapport à l'axe de rotation de l'amortisseur d'oscillations de torsion. En variante, les premiers et les deuxièmes organes de rappel élastique peuvent occuper une même position radiale par rapport à cet axe de rotation.

L'invention a encore pour objet, selon un autre de ses aspects, un groupe motopropulseur pour véhicule comprenant :

- un amortisseur d'oscillations de torsion, comprenant:

  - un premier étage d'amortissement, comprenant des premiers organes de rappel élastique,
  - le deuxième étage d'amortissement, comprenant des deuxièmes organes de rappel élastique, et
  - un dispositif d'amortissement de type pendulaire, comprenant un support et des corps pendulaires mobiles par rapport à ce support, le support étant disposé entre les premiers et les deuxièmes organes de rappel élastique dans le sens de transmission du couple depuis le moteur de propulsion vers la boîte de vitesses,

- un système en amont de l'amortisseur d'oscillations de torsion, comprenant un moteur de propulsion, et
- un système en aval de l'amortisseur d'oscillations de torsion, comprenant la boîte de vitesses, la valeur du moment d'inertie du système en aval, la valeur du moment d'inertie du dispositif d'amortissement de type pendulaire, la valeur de la raideur de l'organe de rappel élastique unique modélisant les premiers organes de rappel élastique et la valeur de la raideur de l'arbre d'entrée de la boîte de vitesse étant prédéfinies, et

la valeur de la raideur de l'organe de rappel élastique unique modélisant les deuxièmes organes de rappel élastique étant alors choisie de manière à ce que le support du dispositif d'amortissement de type pendulaire soit un nœud pour l'onde se propageant dans le groupe motopropulseur du fait d'un acyclisme du moteur de propulsion.

Comme mentionné précédemment, un tel groupe motopropulseur permet de supprimer les inconvénients associés aux vibrations du support du dispositif d'amortissement de type pendulaire sans pour autant affecter les performances de filtration des oscillations de torsion fournies par l'amortisseur d'oscillations de torsion, et tout en respectant les contraintes imposées par le constructeur automobile pour certains composants du groupe motopropulseur.

Tout ou partie des caractéristiques mentionnées ci-dessus en rapport avec le procédé selon l'invention s'applique encore au groupe motopropulseur selon l'invention.

L'invention a encore pour objet, selon un autre de ses aspects, un procédé de dimensionnement du deuxième étage d'amortissement d'un amortisseur d'oscillations de torsion appartenant à un groupe motopropulseur de véhicule, ce groupe comprenant :

- un système en amont de l'amortisseur d'oscillations de torsion, comprenant un moteur de propulsion,
- un système en aval de l'amortisseur d'oscillations de torsion, comprenant une boîte de vitesses, et
- l'amortisseur d'oscillations de torsion, comprenant:

  - un premier étage d'amortissement, comprenant des premiers organes de rappel élastique,
  - le deuxième étage d'amortissement, comprenant des deuxièmes organes de rappel élastique, et
  - un dispositif d'amortissement de type pendulaire, comprenant un support et des corps pendulaires mobiles par rapport à ce support, le support étant disposé entre les premiers et les deuxièmes organes de rappel élastique dans le sens de transmission du couple depuis le moteur de propulsion vers la boîte de vitesses,

procédé dans lequel, connaissant :

- la valeur du moment d'inertie du système en aval,
- la valeur du moment d'inertie du dispositif d'amortissement de type pendulaire,
- la valeur de la raideur (K1) de l'organe de rappel élastique unique modélisant les premiers organes de rappel élastique, et
- la valeur de la raideur (Kgis) de l'arbre d'entrée de la boîte de vitesse,

on détermine la valeur de la raideur (K2) de l'organe de rappel élastique unique modélisant les deuxièmes organes de rappel élastique de manière à ce que :

- $(Kgis/K2) > 5$, notamment $(Kgis/K2) > 10$, notamment $(Kgis/K2) > 100$, Kgis désignant la valeur de la raideur de l'arbre d'entrée de la boîte de vitesses, et
- $K2 < 1,1 * min(Ktot\_optim)$, $min(Ktot\_optim)$ désignant la valeur minimale de la valeur optimale de la raideur équivalente aux raideurs Kgis et K2 considérées comme montées en série.

L'invention a encore pour objet, selon un autre de ses aspects, un procédé de dimensionnement du deuxième étage d'amortissement d'un amortisseur d'oscillations de torsion appartenant à un groupe motopropulseur de véhicule, ce groupe comprenant :

- un système en amont de l'amortisseur d'oscillations de torsion, comprenant un moteur de propulsion,
- un système en aval de l'amortisseur d'oscillations de torsion, comprenant une boîte de vitesses, et
- l'amortisseur d'oscillations de torsion, comprenant:

  - un premier étage d'amortissement, comprenant des premiers organes de rappel élastique,
  - le deuxième étage d'amortissement, comprenant des deuxièmes organes de rappel élastique, et
  - un dispositif d'amortissement de type pendulaire, comprenant un support et des corps pendulaires mobiles par rapport à ce support, le support étant disposé entre les premiers et les deuxièmes organes de rappel élastique dans le sens de transmission du couple depuis le moteur de propulsion vers la boîte de vitesses,

procédé dans lequel, connaissant :

- la valeur du moment d'inertie du système en aval,
- la valeur du moment d'inertie du dispositif d'amortissement de type pendulaire,
- la valeur de la raideur (K1) de l'organe de rappel élastique unique modélisant les premiers organes de rappel élastique, et
- la valeur de la raideur (Kgis) de l'arbre d'entrée de la boîte de vitesse,

on détermine la valeur de la raideur (K2) de l'organe de rappel élastique unique modélisant les deuxièmes organes de rappel élastique de manière à ce que :

- $(Kgis/K2) < 5$, notamment $(Kgis/K2) < 10$, notamment $(Kgis/K2) < 100$, et
- $(K2*Kgis)/(K2+Kgis) < 0,84 * min(Ktot\_optim)$, $min(Ktot\_optim)$ désignant la valeur minimale de la valeur optimale de la raideur équivalente aux raideurs Kgis et K2 considérées comme montées en série.

L'invention a encore pour objet, selon un autre de ses aspects, un procédé de dimensionnement du deuxième étage d'amortissement d'un amortisseur d'oscillations de torsion appartenant à un groupe motopropulseur de véhicule, ce groupe comprenant :

- un système en amont de l'amortisseur d'oscillations de torsion, comprenant un moteur de propulsion,
- un système en aval de l'amortisseur d'oscillations de torsion, comprenant une boîte de vitesses, et
- l'amortisseur d'oscillations de torsion, comprenant:

  - un premier étage d'amortissement, comprenant des premiers organes de rappel élastique,
  - le deuxième étage d'amortissement, comprenant des deuxièmes organes de rappel élastique, et
  - un dispositif d'amortissement de type pendulaire, comprenant un support et des corps pendulaires mobiles par rapport à ce support, le support étant disposé entre les premiers et les deuxièmes organes de rappel élastique dans le sens de transmission du couple depuis le moteur de propulsion vers la boîte de vitesses,

procédé dans lequel, connaissant :

- la valeur du moment d'inertie du système en aval,
- la valeur du moment d'inertie du dispositif d'amortissement de type pendulaire,
- la valeur de la raideur (K1) de l'organe de rappel élastique unique modélisant les premiers organes de rappel élastique, et
- la valeur de la raideur (Kgis) de l'arbre d'entrée de la boîte de vitesse,

on détermine la valeur de la raideur (K2) de l'organe de rappel élastique unique modélisant les deuxièmes organes de rappel élastique de manière à ce que

$(K2*Kgis)/(K2+Kgis)<\lambda*min(Ktot\_optim)$, $min(Ktot\_optim)$ désignant la valeur minimale de la valeur optimale de la raideur équivalente aux raideurs Kgis et K2 considérées comme montées en série, et $\lambda$ étant compris entre 0,84 et 1,1.

On choisit par exemple $\lambda$ égal à 0,84 lorsque $(Kgis/K2)<5$, notamment $(Kgis/K2)<10$, notamment $Kgis/K2<100$ et on choisit par exemple $\lambda$ égal à 1,1 lorsque $Kgis/K2>5$, notamment $(Kgis/K2)>10$, notamment $(Kgis/K2)>100$.

Tout ou partie ou partie des caractéristiques mentionnées précédemment s'applique encore à l'un des trois autres aspects de l'invention qui viennent d'être décrits.

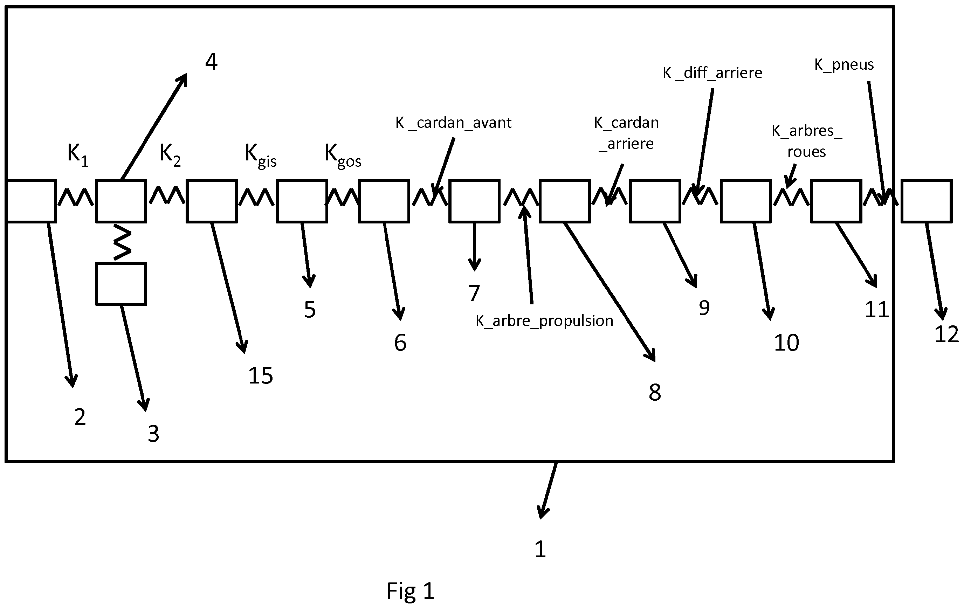

L'invention pourra être mieux comprise à la lecture de la description qui va suivre d'un exemple non limitatif de mise en œuvre de celle-ci et à l'examen du dessin annexé sur lequel la figure 1 représente de façon schématique un groupe motopropulseur de véhicule dans lequel peut être mise en œuvre l'invention..

La figure 1 représente un groupe motopropulseur 1 de véhicule, ainsi que ce véhicule 12.

Ce véhicule peut être une automobile ou un véhicule dit « industriel », un tel véhicule industriel étant par exemple un véhicule de transport en commun, un poids lourd ou encore un véhicule agricole.

Le groupe motopropulseur 1 comprend ici :

- un moteur de propulsion, ce dernier étant un moteur thermique,
- un convertisseur de couple hydrodynamique 3 comprenant une entrée, une flexplate, une pompe, une turbine et une sortie,
- un amortisseur d'oscillations de torsion comprenant deux étages d'amortissement en série, et un dispositif d'amortissement de type pendulaire disposé entre ces deux étages,
- une boîte de vitesses,
- un cardan élastique avant,
- un cardan élastique arrière,
- une arbre de propulsion en deux parties reliant les cardans élastiques avant et arrière,
- un différentiel arrière, et
- des roues motrices.

Le moteur de propulsion, l'entrée du convertisseur de couple hydrodynamique, la flexplate, la pompe et la turbine constituent dans l'exemple considéré un système en amont de l'amortisseur d'oscillations de torsion. Ce système en amont est regroupé sur la figure 1 avec l'entrée de l'amortisseur de torsion pour former un bloc 2.

Le premier étage d'amortissement de l'amortisseur comprend des premiers organes de rappel élastique montés en parallèle et modélisés sur la figure 1 par un unique organe de rappel élastique de raideur K1, ces premiers organes de rappel élastique étant disposés entre l'entrée et la sortie de ce premier étage.

La sortie du premier étage de l'amortisseur est solidaire du support 4 du dispositif d'amortissement de type pendulaire. Ce dernier présente des pistes de roulement coopérant avec des organes de roulement tels que des rouleaux pour guider le déplacement des corps pendulaires 3 qui sont également munis de pistes de roulement. La connexion entre le support 4 et les corps pendulaires 3 est représentée sous la forme d'une raideur. Les corps pendulaires 3, pris dans leur ensemble, présentent un moment d'inertie Ip.

Le support 4 du dispositif d'amortissement de type pendulaire est également solidaire de l'entrée du deuxième étage d'amortissement de l'amortisseur de torsion.

Ce deuxième étage comprend des deuxièmes organes de rappel élastique montés en parallèle et modélisés sur la figure 1 par une raideur K2. Ces deuxièmes organes de rappel élastique sont disposés entre l'entrée et la sortie 15 de ce deuxième étage d'amortissement.

La boîte de vitesses 5, le cardan élastique avant 6, la première partie 7 de l'arbre de propulsion, la deuxième partie 8 de l'arbre de propulsion, le cardan élastique arrière 9 et le différentiel arrière 10 forment ici un système en aval de l'amortisseur d'oscillations de torsion, le moment d'inertie de ce système en aval étant désigné par la suite I_transmission.

En variante, un cardan intermédiaire est présent entre la première partie 7 et la deuxième partie 8 de l'arbre de propulsion et I_transmission prend également en compte la présence de ce cardan intermédiaire.

Ce système en aval de l'amortisseur d'oscillations de torsion est disposé en entrée des roues motrices 11 du véhicule.

Comme on peut le voir sur la figure 1, la connexion entre:

- d'une part la sortie 15 du deuxième étage d'amortissement et la sortie du convertisseur de couple hydrodynamique, et
- d'autre part la boîte de vitesses 5
  est réalisée par l'arbre d'entrée de la boîte de vitesses 5 qui présente une raideur Kgis. En pratique, du fait de la faible valeur de moment d'inertie de la sortie 15 du deuxième étage d'amortissement et de la sortie du convertisseur de couple hydrodynamique, on peut considérer que le deuxième étage d'amortissement de l'amortisseur d'oscillations de torsion et l'arbre d'entrée de la boîte de vitesses sont en série, de sorte que l'on peut considérer que le support 4 du dispositif d'amortissement de type pendulaire est connecté à la boîte de vitesses 5 via une raideur équivalente Ktot = (K2*Kgis)/(K2+Kgis).

Toujours dans l'exemple de la figure 1 :

- la connexion entre la boîte de vitesses 5 et le cardan élastique avant 6 est réalisée par l'arbre de sortie de la boîte de vitesses 5 qui présente une raideur Kgos,
- la connexion entre le cardan élastique avant 6 et la première partie 7 de l'arbre de propulsion présente une raideur K_cardan_avant,
- la connexion entre la première partie 7 de l'arbre de propulsion et la deuxième partie 8 de l'arbre de propulsion présente une raideur K_arbre_propulsion,
- la connexion entre la deuxième partie 8 de l'arbre de propulsion et le cardan élastique arrière 9 présente une raideur K_cardan_arrière,
- la connexion entre le cardan élastique arrière 9 et le différentiel arrière 10 présente une raideur K_diff_arrière,
- la connexion entre le différentiel arrière 10 et les roues motrices 11 est réalisée par les arbres de roues selon une raideur unique K_arbres_roues correspondant aux deux arbres de roues en parallèle, et
- la connexion entre les roues motrices 11 et le véhicule 12 est réalisée par les pneus qui présentent une raideur équivalente pour l'ensemble de ces pneus égale à Kpneus.

La raideur équivalente Ktot aux raideurs Kgis et K2 considérées comme montées en série a une valeur optimale pouvant être calculée comme suit:

$$K\_optim = ne^2 \times w^2 \times I\_transmission - K\_arbres\_roues,$$

ne désignant l'ordre d'excitation du moteur thermique du véhicule,
w désignant la vitesse du moteur de propulsion,

Selon l'exemple décrit, la valeur du moment d'inertie I_transmission, la valeur de la raideur K1, la valeur de la raideur Kgis, et la valeur du moment d'inertie du dispositif d'amortissement de type pendulaire, ainsi le cas échéant que la valeur du moment d'inertie du système en amont de l'amortisseur d'oscillations de torsion étant données, on détermine la valeur de la raideur K2 de manière à ce que le support 4 du dispositif d'amortissement de type pendulaire soit un nœud pour l'onde se propageant dans le groupe motopropulseur du fait d'un acyclisme du moteur de propulsion, c'est-à-dire de manière à annuler ces vibrations sur le support 4.

Selon cet exemple, on obtient cette annulation des vibrations sur le support 4 en choisissant K2 tel que $(K2*Kgis)/(K2+Kgis)<\lambda*min(Ktot\_optim)$, min(Ktot_optim) désignant la valeur minimale de la valeur optimale de la raideur équivalente Ktot et $\lambda$ étant compris entre 0,84 et 1,1.

Deux cas de figures peuvent alors se présenter.

Lorsque la raideur Kgis est élevée, par exemple telle que $Kgis/K2>5$, notamment $Kgis/K2>10$, notamment $Kgis/K2>100$, on choisit alors $\lambda$ égal à 1,1 de telle sorte que $K2<1,1*min(Ktot\_optim)$.

Lorsque la raideur Kgis est plus faible, par exemple telle que $Kgis/K2<5$, notamment $Kgis/K2<10$, notamment $Kgis/K2<100$, on choisit alors $\lambda$ égal à 0,84 de telle sorte que $(K2*Kgis)/(K2+Kgis)<0,84*min(Ktot\_optim)$.

L'invention n'est pas limitée à l'exemple ci-dessus.

Dans un autre exemple, le groupe motopropulseur comprend un double embrayage tel qu'un double embrayage humide ou un double embrayage à sec, et non un convertisseur de couple hydrodynamique.

## Revendications

1. Procédé de dimensionnement du deuxième étage d'amortissement d'un amortisseur d'oscillations de torsion appartenant à un groupe motopropulseur de véhicule (1), ce groupe comprenant :

   - un système en amont de l'amortisseur d'oscillations de torsion, comprenant un moteur de propulsion,
   - un système en aval de l'amortisseur d'oscillations de torsion, comprenant une boîte de vitesses (5), et
   - l'amortisseur d'oscillations de torsion, comprenant:

      - un premier étage d'amortissement, comprenant des premiers organes de rappel élastique,
      - le deuxième étage d'amortissement, comprenant des deuxièmes organes de rappel élastique, et
      - un dispositif d'amortissement de type pendulaire, comprenant un support (4) et des corps pendulaires (3) mobiles par rapport à ce support (4), le support (4) étant disposé entre les premiers et les deuxièmes organes de rappel élastique dans le sens de transmission du couple depuis le moteur de propulsion vers la boîte de vitesses (5),

   procédé dans lequel, connaissant :

      - la valeur du moment d'inertie (I_transmission) du système en aval,
      - la valeur du moment d'inertie du dispositif d'amortissement de type pendulaire,
      - la valeur de la raideur (K1) de l'organe de rappel élastique unique modélisant les premiers organes de rappel élastique, et
      - la valeur de la raideur (Kgis) de l'arbre d'entrée de la boîte de vitesses (5), **caractérisé en ce qu'**on détermine la valeur de la raideur (K2) de l'organe de rappel élastique unique modélisant les deuxièmes organes de rappel élastique de manière à ce que le support (4) du dispositif d'amortissement de type pendulaire soit un nœud pour l'onde se propageant dans le groupe motopropulseur (1) du fait d'un acyclisme du moteur de propulsion.

2. Procédé selon la revendication 1, dans lequel on détermine la valeur de la raideur (K2) de l'organe de rappel élastique unique modélisant les deuxièmes organes de rappel élastique en connaissant également la valeur du moment d'inertie du système en amont de l'amortisseur d'oscillations de torsion.

3. Procédé selon la revendication 1 ou 2, dans lequel la raideur équivalente (Ktot) au montage en série de :

   - de l'organe de rappel élastique unique modélisant les deuxièmes organes de rappel élastique du deuxième étage d'amortissement, et
   - l'arbre d'entrée de la boîte de vitesses

   présente une valeur optimale (Ktot_optim) qui est fonction de la vitesse du moteur de propulsion et de l'ordre d'excitation du moteur du véhicule, et dans lequel on choisit la valeur de la raideur (K2) de l'organe de rappel élastique unique modélisant les deuxièmes organes de rappel élastique de manière à ce que :

   - $(Kgis/K2)>5$, et
   - $K2<1,1*min(Ktot\_optim)$, min(Ktot_optim) désignant la valeur minimale de la valeur optimale de la raideur équivalente (Ktot).

4. Procédé selon la revendication 1 ou 2, dans lequel la raideur équivalente (Ktot) au montage en série de :

   - de l'organe de rappel élastique unique modélisant les deuxièmes organes de rappel élastique du deuxième étage d'amortissement, et
   - l'arbre d'entrée de la boîte de vitesses

   présente une valeur optimale (Ktot_optim) qui est fonction de la vitesse du moteur de propulsion et de l'ordre d'excitation du moteur du véhicule, et dans lequel on choisit la valeur de la raideur (K2) de l'organe de rappel élastique unique modélisant les deuxièmes organes de rappel élastique de manière à ce que :

   - Kgis/K2<5, et
   - (K2*Kgis)/(K2+Kgis)<0,84*min(Ktot_optim), min(Ktot_optim) désignant la valeur minimale de la valeur optimale de la raideur équivalente (Ktot).

5. Procédé selon l'une quelconque des revendications précédentes, dans lequel le système en amont de l'amortisseur d'oscillations de torsion comprend en outre un convertisseur de couple hydrodynamique.

6. Procédé selon l'une quelconque des revendications précédentes, dans lequel le système en aval de l'amortisseur d'oscillations de torsion comprend en outre un arbre de sortie de boîte de vitesses, un pont et un différentiel arrière.

7. Procédé selon l'une quelconque des revendications précédentes, dans lequel chaque étage d'amortissement de l'amortisseur d'oscillations de torsion présente une entrée et une sortie, et dans lequel le support (4) du dispositif d'amortissement de type pendulaire est solidaire de la sortie du premier étage et de l'entrée du deuxième étage.

8. Groupe motopropulseur pour véhicule (1) comprenant :

   - un amortisseur d'oscillations de torsion, comprenant:

     - un premier étage d'amortissement, comprenant des premiers organes de rappel élastique,
     - le deuxième étage d'amortissement, comprenant des deuxièmes organes de rappel élastique, et
     - un dispositif d'amortissement de type pendulaire, comprenant un support (4) et des corps pendulaires (3) mobiles par rapport à ce support (4), le support (4) étant disposé entre les premiers et les deuxièmes organes de rappel élastique dans le sens de transmission du couple depuis le moteur de propulsion vers la boîte de vitesses (5),

   - un système en amont de l'amortisseur d'oscillations de torsion, comprenant un moteur de propulsion, et
   - un système en aval de l'amortisseur d'oscillations de torsion, comprenant une boîte de vitesses (5),

   la valeur du moment d'inertie (I_transmission) du système en aval, la valeur du moment d'inertie du dispositif d'amortissement de type pendulaire, la valeur de la raideur (K1) de l'organe de rappel élastique unique modélisant les premiers organes de rappel élastique, la valeur de la raideur (Kgis) de l'arbre d'entrée de la boîte de vitesses (5) étant prédéfinies, et **caractérisé en ce que** la valeur de la raideur (K2) de l'organe de rappel élastique unique modélisant les deuxièmes organes de rappel élastique étant alors choisie de manière à ce que le support (4) du dispositif d'amortissement de type pendulaire soit un nœud pour l'onde se propageant dans le groupe motopropulseur du fait d'un acyclisme du moteur de propulsion.

**Patentansprüche**

1. Verfahren zur Dimensionierung der zweiten Dämpfungsstufe eines Drehschwingungsdämpfers, der zu einem Antriebsstrang (1) eines Fahrzeugs gehört, wobei dieser Strang umfasst:

   - ein System stromauf des Drehschwingungsdämpfers, das einen Antriebsmotor umfasst,
   - ein System stromab des Drehschwingungsdämpfers, das ein Getriebe (5) umfasst, und
   - den Drehschwingungsdämpfer, der umfasst:

     - eine erste Dämpfungsstufe, die erste elastische Rückstellorgane umfasst,
     - die zweite Dämpfungsstufe, die zweite elastische Rückstellorgane umfasst, und

- eine pendelartige Dämpfungsvorrichtung, die einen Träger (4) und relativ zu diesem Träger (4) bewegliche Pendelkörper (3) umfasst, wobei der Träger (4) in Drehmomentübertragungsrichtung vom Antriebsmotor zum Getriebe (5) zwischen den ersten und den zweiten elastischen Rückstellorganen angeordnet ist,

wobei das Verfahren, wenn Folgendes bekannt ist:

- der Wert des Trägheitsmoments (I_transmission) des stromabwärtigen Systems,
- der Wert des Trägheitsmoments der pendelartigen Dämpfungsvorrichtung,
- der Wert der Steifigkeit (K1) des einzigen elastischen Rückstellorgans, das die ersten elastischen Rückstellorgane modelliert, und
- der Wert der Steifigkeit (Kgis) der Getriebeeingangswelle (5),

**dadurch gekennzeichnet ist, dass** man
den Wert der Steifigkeit (K2) des einzigen elastischen Rückstellorgans, das die zweiten elastischen Rückstellorgane modelliert, derart bestimmt, dass der Träger (4) der pendelartigen Dämpfungsvorrichtung ein Knoten für die Welle ist, die sich aufgrund eines Azyklismus des Antriebsmotors im Antriebsstrang (1) ausbreitet.

2. Verfahren nach Anspruch 1, bei dem man den Wert der Steifigkeit (K2) des einzigen elastischen Rückstellorgans, das die zweiten elastischen Rückstellorgane modelliert, bestimmt, wenn auch der Wert des Trägheitsmoments des Systems stromauf des Drehschwingungsdämpfers bekannt ist.

3. Verfahren nach Anspruch 1 oder 2, bei dem die äquivalente Steifigkeit (Ktot) für die Hintereinanderschaltung:

- des einzigen elastischen Rückstellorgans, das die zweiten elastischen Rückstellorgane der zweiten Dämpfungsstufe modelliert, und
- der Getriebeeingangswelle
einen optimalen Wert (Ktot_optim) aufweist, der von der Drehzahl des Antriebsmotors und von der Anregungsordnung des Motors des Fahrzeugs abhängig ist, und bei dem man den Wert der Steifigkeit (K2) des einzigen elastischen Rückstellorgans, das die zweiten elastischen Rückstellorgane modelliert, derart wählt, dass:

- (Kgis/K2)>5 und
- K2<1,1*min(Ktot_optim), wobei min(Ktot_optim) den kleinsten Wert des optimalen Werts der äquivalenten Steifigkeit (Ktot) bezeichnet.

4. Verfahren nach Anspruch 1 oder 2, bei dem die äquivalente Steifigkeit (Ktot) für die Hintereinanderschaltung:

- des einzigen elastischen Rückstellorgans, das die zweiten elastischen Rückstellorgane der zweiten Dämpfungsstufe modelliert, und
- der Getriebeeingangswelle
einen optimalen Wert (Ktot_optim) aufweist, der von der Drehzahl des Antriebsmotors und von der Anregungsordnung des Motors des Fahrzeugs abhängig ist, und bei dem man den Wert der Steifigkeit (K2) des einzigen elastischen Rückstellorgans, das die zweiten elastischen Rückstellorgane modelliert, derart wählt, dass:

- Kgis/K2<5 und
- (K2*Kgis)/(K2+Kgis)<0,84*min(Ktot_optim), wobei min(Ktot_optim) den kleinsten Wert des optimalen Werts der äquivalenten Steifigkeit (Ktot) bezeichnet.

5. Verfahren nach einem der vorhergehenden Ansprüche, bei dem das System stromauf des Drehschwingungsdämpfers ferner einen hydrodynamischen Drehmomentwandler umfasst.

6. Verfahren nach einem der vorhergehenden Ansprüche, bei dem das System stromab des Drehschwingungsdämpfers ferner eine Getriebeausgangswelle, eine Hinterachse und ein hinteres Differenzial umfasst.

7. Verfahren nach einem der vorhergehenden Ansprüche, bei dem jede Dämpfungsstufe des Drehschwingungsdämpfers einen Eingang und einen Ausgang aufweist und bei dem der Träger (4) der pendelartigen Dämpfungsvorrichtung mit dem Ausgang der ersten Stufe und dem Eingang der zweiten Stufe fest verbunden ist.

**8.** Antriebsstrang für ein Fahrzeug (1), umfassend:

- einen Drehschwingungsdämpfer, der umfasst:
- eine erste Dämpfungsstufe, die erste elastische Rückstellorgane umfasst,
- die zweite Dämpfungsstufe, die zweite elastische Rückstellorgane umfasst, und
- eine pendelartige Dämpfungsvorrichtung, die einen Träger (4) und relativ zu diesem Träger (4) bewegliche Pendelkörper (3) umfasst, wobei der Träger (4) in Drehmomentübertragungsrichtung vom Antriebsmotor zum Getriebe (5) zwischen den ersten und den zweiten elastischen Rückstellorganen angeordnet ist,
- ein System stromauf des Drehschwingungsdämpfers, das einen Antriebsmotor umfasst, und
- ein System stromab des Drehschwingungsdämpfers, das ein Getriebe (5) umfasst,

wobei der Wert des Trägheitsmoments (I_transmission) des stromabwärtigen Systems, der Wert des Trägheitsmoments der pendelartigen Dämpfungsvorrichtung, der Wert der Steifigkeit (K1) des einzigen elastischen Rückstellorgans, das die ersten elastischen Rückstellorgane modelliert, der Wert der Steifigkeit (Kgis) der Getriebeeingangswelle (5) vorgegeben sind, und

**dadurch gekennzeichnet, dass** der Wert der Steifigkeit (K2) des einzigen elastischen Rückstellorgans, das die zweiten elastischen Rückstellorgane modelliert, dabei derart gewählt wird, dass der Träger (4) der pendelartigen Dämpfungsvorrichtung ein Knoten für die Welle ist, die sich aufgrund eines Azyklismus des Antriebsmotors im Antriebsstrang ausbreitet.

**Claims**

**1.** A method for sizing the second damping stage of a torsional oscillation damper belonging to a vehicle power train (1), said power train including:

- a system upstream of the torsional oscillation damper, including an engine,
- a system downstream of the torsional oscillation damper, including a gearbox (5), and
- the torsional oscillation damper, including:

- a first damping stage, including first resilient return members,
- the second damping stage, including second resilient return members, and
- a pendular damping device, including a mounting (4) and pendulum bodies (3) that are movable relative to said mounting (4), the mounting (4) being arranged between the first and second resilient return members in the direction of transmission of the torque from the engine to the gearbox (5),

said method in which knowing:

- the value of the moment of inertia (I_transmission) of the system downstream,
- the value of the moment of inertia of the pendular damping device,
- the stiffness value (K1) of the single resilient return member modeling the first resilient return members, and
- the stiffness value (Kgis) of the input shaft of the gearbox (5),

**characterized in that** the stiffness value (K2) of the single resilient return member modelling the second resilient return members is determined so that the mounting (4) of the pendular damping device is a node for the wave propagating in the power train (1) due to a cyclic irregularity of the drive engine.

**2.** The method as claimed in claim 1, in which the stiffness value (K2) of the single resilient return member modelling the second resilient return members is determined in consideration of the value of the moment of inertia of the system upstream of the torsional oscillation damper.

**3.** The method as claimed in claim 1 or 2, in which the stiffness (Ktot) equivalent to the assembly in series of:

- the single resilient return member modelling the second resilient return members of the second damping stage, and
- the input shaft of the gearbox

has an optimum value (Ktot_optim) that is a function of the speed of the engine and of the order of excitation of the engine of the vehicle, and in which the stiffness value (K2) of the single resilient return member modelling the second resilient return members is set such that:
- (Kgis/K2)>5, and
- K2<1.1*min(Ktot_optim), min(Ktot_optim) being the minimum value of the optimum value of the equivalent stiffness (Ktot).

4. The method as claimed in claim 1 or 2, in which the stiffness (Ktot) equivalent to the assembly in series of:

- the single resilient return member modelling the second resilient return members of the second damping stage, and
- the input shaft of the gearbox

has an optimum value (Ktot_optim) that is a function of the speed of the engine and of the order of excitation of the engine of the vehicle, and in which the stiffness value (K2) of the single resilient return member modelling the second resilient return members is set such that:
- Kgis/K2<5, and
- (K2*Kgis)/(K2+Kgis)<0.84*min(Ktot_optim), min(Ktot_optim) being the minimum value of the optimum value of the equivalent stiffness (Ktot).

5. The method as claimed in any one of the preceding claims, in which the system upstream of the torsional oscillation damper also includes a hydrodynamic torque converter.

6. The method as claimed in any one of the preceding claims, in which the system downstream of the torsional oscillation damper also includes a gearbox output shaft, an axle and a rear differential.

7. The method as claimed in any one of the preceding claims, in which each damping stage of the torsional oscillation damper has an input and an output, and in which the mounting (4) of the pendular damping device is rigidly connected to the output of the first stage and the input of the second stage.

8. A power train for a vehicle (1) including:

- a torsional oscillation damper, including:

- a first damping stage, including first resilient return members,
- the second damping stage, including second resilient return members, and
- a pendular damping device, including a mounting (4) and pendulum bodies (3) that are movable relative to said mounting (4), the mounting (4) being arranged between the first and second resilient return members in the direction of transmission of the torque from the engine to the gearbox (5),

- a system upstream of the torsional oscillation damper, including an engine, and
- a system downstream of the torsional oscillation damper, including a gearbox (5),

the value of the moment of inertia (I_transmission) of the system downstream, the value of the moment of inertia of the pendular damping device, the stiffness value (K1) of the single resilient return member modelling the first resilient return members, the stiffness value (Kgis) of the input shaft of the gearbox (5) being predefined, and **characterized in that** the stiffness value (K2) of the single resilient return member modelling the second resilient return members then being set so that the mounting (4) of the pendular damping device is a node for the wave propagating in the power train due to a cyclic irregularity of the drive engine.

Fig 1

EP 3 332 146 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102012205792 A1
- DE 112010006009 T5
- DE 102014205045 A1
- US 2014274524 A1
- WO 2007054050 A1